# EUROPEAN PATENT APPLICATION

(11) **EP 4 644 115 A1**
(43) Date of publication of application: **05.11.2025**
(21) Application number: 24784933.4
(22) Date of filing: 03.04.2024
(51) Int. Cl.: B32B 15/01, B32B 7/027, B32B 15/18, C23C 26/00

(54) **SURFACE-TREATED STEEL SHEET**

(30) Priority: 04.04.2023 JP 2023060764
(71) Applicant: NIPPON STEEL CORPORATION, Chiyoda-ku Tokyo 100-8071 (JP)
(72) Inventor: HIRAI, Akiko, Tokyo 100-8071 (JP); FUJII, Takashi, Tokyo 100-8071 (JP); KAWAMURA, Yasuaki, Tokyo 100-8071 (JP)
(74) Representative: Vossius & Partner Patentanwälte Rechtsanwälte mbB
(86) International application number: PCT/JP2024/013747
(87) International publication number: WO 2024/210149

(57) **Abstract**

To further improve heat yellowing resistance of a coating layer even in a case of having the coating layer containing a vanadium compound.

A surface-treated steel sheet according to the present invention includes: a Zn-containing plating layer located on a surface of a steel sheet serving as a base material; a primer coating layer located on the Zn-containing plating layer, and at least containing a vanadium compound; and an upper coating layer located on the primer coating layer, wherein: an average thickness of the primer coating layer is in a range of 3.0 to 15.0 µm; an average thickness of the upper coating layer is in a range of 7.0 to 25.0 µm; and a Vickers hardness of the upper coating layer is in a range of 25 to 70 Hv, a Vickers hardness of the primer coating layer is 20 Hv or less, and a difference between the Vickers hardness of the upper coating layer and the Vickers hardness of the primer coating layer is in a range of 5 to 50 Hv.

## Description

### TECHNICAL FIELD

The present invention relates to a surface-treated steel sheet.

### BACKGROUND ART

As steel sheet materials for uses such as a home electric appliance use, a building material use, and an automobile use, a pre-painted metal sheet coated with a colored coating film beforehand is being used in place of a conventional post-painted steel sheet painted after forming work. Such a pre-painted metal sheet is one coated with the colored coating film on a surface of a steel sheet or a plated steel sheet subjected to rust prevention treatment. Such a pre-painted metal sheet has characteristics of having sufficient workability and further having good corrosion resistance while having a beautiful external appearance.

In the pre-painted metal sheet as described above, in order to further improve the corrosion resistance as the pre-painted metal sheet, there is proposed a technique of making the coating layer provided on the plating layer into a multi-layer structure of a primer coating layer and an upper coating film layer, and containing a vanadium compound as a rust preventive pigment with respect to such a primer coating layer (for example, refer to Patent Document 1 below.).

### PRIOR ART DOCUMENT

### PATENT DOCUMENT

Patent Document 1: International Publication WO 2017/035572

### SUMMARY OF THE INVENTION

### PROBLEMS TO BE SOLVED BY THE INVENTION

When the present inventors study the use of such a pre-painted metal sheet as disclosed in Patent Document 1 above as a material of such home electric appliances to be exposed to heat as a water heater, an outdoor unit of an air conditioner, and the like, they have been aware that the coating layer provided on the plating layer may be tinged with yellow over time. When such a change in hue (in more detail, yellowing due to heat) occurs, an external appearance of the home electric appliance changes. Therefore, it has been revealed that heat yellowing resistance of the coating film provided on the plating layer has room for further improvement.

Thus, the present invention was made in consideration of the above problem, and an object of the present invention is to provide a surface-treated steel sheet capable of further improving heat yellowing resistance of a coating layer even in a case of having the coating layer containing a vanadium compound.

### MEANS FOR SOLVING THE PROBLEMS

To solve the above problem, as a result of being intensively studied by the present inventors, such yellowing due to heat as described above has been presumed to be caused by a vanadium compound contained in the coating layer being oxidized and discolored to tinge it with yellow. Based on that, the present inventors have come up with an idea that even though the vanadium compound is oxidized and discolored, making the oxidized and discolored vanadium compound less likely to be visually recognized from the outside results in that a change in external appearance as a surface-treated steel sheet may be less likely to be recognized. Thus, based on such an idea, the present inventors have intensively studied a configuration for making the oxidized and discolored vanadium less likely to be visually recognized.

The gist of the present invention completed as a result of such a study is as follows.

(1) A surface-treated steel sheet includes: a Zn-containing plating layer located on a surface of a steel sheet serving as a base material; a primer coating layer located on the Zn-containing plating layer, and at least containing a vanadium compound; and an upper coating layer located on the primer coating layer, wherein: an average thickness of the primer coating layer is in a range of 3.0 to 15.0 µm; an average thickness of the upper coating layer is in a range of 7.0 to 25.0 µm; and a Vickers hardness of the upper coating layer is in a range of 25 to 70 Hv, a Vickers hardness of the primer coating layer is 20 Hv or less, and a difference between the Vickers hardness of the upper coating layer and the Vickers hardness of the primer coating layer is in a range of 5 to 50 Hv.
(2) The surface-treated steel sheet according to (1), wherein: a glass transition point Tg of a film-forming component of the primer coating layer is in a range of 0 to 40°C; and a glass transition point Tg of a film-forming component of the upper coating layer is in a range of 40 to 70°C.
(3) The surface-treated steel sheet according to (1) or (2), wherein an average particle diameter of the vanadium compound is in a range of 0.05 to 2.00 µm.
(4) The surface-treated steel sheet according to (1) or (2), wherein: a content of the vanadium compound in the primer coating layer is in a range of 5 to 50 mass% relative to a total solid content mass of the primer coating layer; a content of a film-forming component in the primer coating layer is in a range of 30 to 80 mass% relative to the total solid content mass of the primer coating layer; and the vanadium compound and the film-forming component are contained so that a total content of the vanadium compound and the film-forming component is 100 mass% or less of the total solid content mass of the primer coating layer.
(5) The surface-treated steel sheet according to (3), wherein: a content of the vanadium compound in the primer coating layer is in a range of 5 to 50 mass% relative to a total solid content mass of the primer coating layer; a content of a film-forming component in the primer coating layer is in a range of 30 to 80 mass% relative to the total solid content mass of the primer coating layer; and the vanadium compound and the film-forming component are contained so that a total content of the vanadium compound and the film-forming component is 100 mass% or less of the total solid content mass of the primer coating layer.
(6) The surface-treated steel sheet according to (1) or (2), wherein the upper coating layer contains an aluminum pigment.
(7) The surface-treated steel sheet according to (1) or (2), further includes a chemical treatment coating layer between the Zn-containing plating layer and the primer coating layer.

### EFFECT OF THE INVENTION

According to the present invention as explained above, it becomes possible to further improve the heat yellowing resistance of the coating layer even in a case of having the coating layer containing the vanadium compound.

### BRIEF DESCRIPTION OF THE DRAWINGS

[FIG. 1A] FIG. 1A is an explanatory view schematically illustrating an example of a configuration of a surface-treated steel sheet according to an embodiment of the present invention.
[FIG. 1B] FIG. 1B is an explanatory view schematically illustrating an example of a configuration of a surface-treated steel sheet according to the embodiment.
[FIG. 2A] FIG. 2A is an explanatory view schematically illustrating an example of a configuration of a surface-treated steel sheet according to the embodiment.
[FIG. 2B] FIG. 2B is an explanatory view schematically illustrating an example of a configuration of a surface-treated steel sheet according to the embodiment.

### EMBODIMENTS FOR CARRYING OUT THE INVENTION

A preferred embodiment of the present invention will be explained in detail with reference to the attached drawings below. Note that in this description and the drawings, components that have substantially the same functional configuration will be omitted from the duplicated explanation by applying the same code.

### (Regarding surface-treated steel sheet)

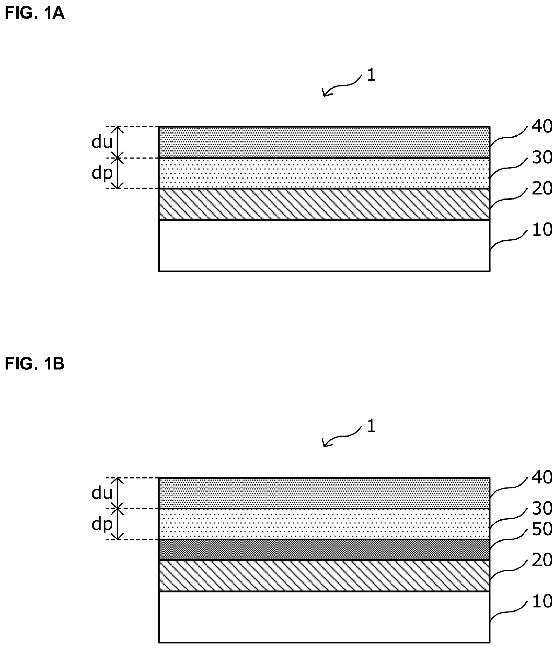

Surface-treated steel sheets according to the embodiment of the present invention will be explained blow in detail with reference to FIG. 1A to FIG. 2B. FIG. 1A to FIG. 2B are explanatory views schematically illustrating examples of configurations of the surface-treated steel sheets according to this embodiment.

### <Regarding overall configuration of surface-treated steel sheet>

As schematically illustrated in FIG. 1A, a surface-treated steel sheet 1 according to this embodiment has a base material steel sheet 10, a Zn-containing plating layer 20 located on a surface on one side of the base material steel sheet 10, a primer coating layer 30 located on the Zn-containing plating layer 20, and an upper coating layer 40 located on the primer coating layer 30. Further, the surface-treated steel sheet 1 according to this embodiment may further have a chemical treatment coating layer 50 between the Zn-containing plating layer 20 and the primer coating layer 30 as schematically illustrated in FIG. 1B.

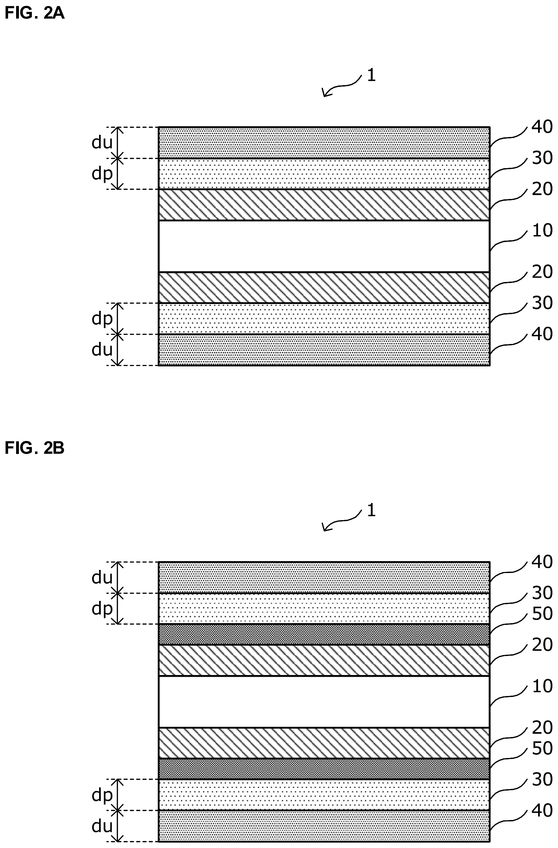

Note that such a Zn-containing plating layer 20, a primer coating layer 30, an upper coating layer 40, and a chemical treatment coating layer 50 provided as necessary may be provided on both sides of the base material steel sheet 10 as schematically illustrated in FIG. 2A and FIG. 2B.

The configurations which the surface-treated steel sheets 1 according to this embodiment have will be explained below in detail.

### <Regarding base material steel sheet 10>

As the base material steel sheet 10, for example, various steel sheets such as Al-killed steel, ultralow carbon steel containing Ti, Nb, and so on, and high-strength steel in which ultralow carbon steel further contains strengthening elements such as P, Si, and Mn can be used.

Further, a thickness of the base material steel sheet 10 only needs to be set appropriately according to the mechanical strength or the like required for the surface-treated steel sheet 1, and can be set to, for example, about 0.2 mm to 10.0 mm.

### <Regarding Zn-containing plating layer 20>

The Zn-containing plating layer 20 is located on such a surface of the base material steel sheet 10 as described above. Such a Zn-containing plating layer 20 is composed of various kinds of zinc-based plating. As such zinc-based plating, for example, there can be cited hot-dip galvanizing, electrogalvanizing, zinc-nickel alloy plating, alloyed hot-dip galvanizing, aluminum-zinc alloy plating, zinc-aluminum-magnesium alloy plating, zinc-vanadium composite plating, zinc-zirconium composite plating, and so on.

Among such zinc-based platings, in particular, as the Zn-containing plating layer 20, zinc-aluminum-magnesium alloy plating is preferably used, and zinc-aluminum-magnesium-silicon alloy plating, which contains Al: 4 to 22 mass%, Mg: 1 to 10 mass%, Si: 0.0001 to 2.0000 mass%, and the balance of Zn and impurities, is more preferably used.

### [Al: 4 to 22 mass%]

A content of Al is set to 4 mass% or more, thereby making it possible to further improve corrosion resistance of the steel sheet. The content of Al is more preferably 5 mass% or more. On the other hand, the content of Al is set to 22 mass% or less, thereby making it possible to further improve the corrosion resistance of the steel sheet while inhibiting saturation of such a corrosion resistance improving effect as described above. The content of Al is more preferably 16 mass% or less.

### [Mg: 1 to 10 mass%]

A content of Mg is set to 1 mass% or more, thereby making it possible to further improve the corrosion resistance of the steel sheet. The content of Mg is more preferably 2 mass% or more. On the other hand, in a plating bath used for forming the plating layer, the concentration of Mg is adjusted to the concentration such that the content of Mg in the Zn-containing plating layer 20 after manufacture is 10 mass% or less, thereby making it possible to stabilize the generation of dross in the plating bath and stably manufacture a plated steel sheet. In the plating bath used for forming the Zn-containing plating layer 20, it is more preferable to adjust the concentration of Mg to the concentration such that the content of Mg in the Zn-containing plating layer 20 after manufacture is 5 mass% or less.

### [Si: 0.0001 to 2.0000 mass%]

A content of Si is set to 0.0001 mass% or more, thereby making it possible to further improve the adhesion of the Zn-containing plating layer 20 (more specifically, the adhesion between the base material steel sheet 10 and the Zn-containing plating layer 20). On the other hand, the content of Si is set to 2.0000 mass% or less, thereby making it possible to further improve the adhesion of the Zn-containing plating layer 20 while inhibiting saturation of the adhesion improving effect of the Zn-containing plating layer 20. The content of Si is more preferably 1.6000 mass% or less.

Further, the Zn-containing plating layer 20 according to this embodiment may contain 1 mass% or less of elements such as Fe, Sb, and Pb either alone or in combination, in place of a part of Zn of the balance.

As the zinc-based plated steel sheet with the Zn-containing plating layers 20 each having such chemical components as described above provided thereon, for example, there can be cited a hot-dip zinc-aluminum-magnesium alloy plated steel sheet having a Zn-6%Al-3%Mg alloy plating layer, a hot-dip zinc-aluminum-magnesium-silicon alloy plated steel sheet (for example, "SUPERDYMA (registered trademark)" manufactured by NIPPON STEEL CORPORATION) such as a plated steel sheet having a Zn-11%Al-3%Mg-0.2%Si alloy plating layer, or the like.

### [Measurement method of chemical component]

Chemical components of the Zn-containing plating layer 20 as described above can be measured using ICP-AES (inductively coupled plasma atomic emission spectrometry). The focused surface-treated steel sheet is cut out to collect a sample, and the primer coating layer, the upper coating layer, and the like are removed beforehand. A method of removing the primer coating layer, the upper coating layer, and the like is not particularly limited, but a well-known method may be used. For example, with respect to the cut sample, the coating is peeled under the following conditions to expose the steel sheet. First, a coating film remover (NEOREVER #160, manufactured by SANSAIKAKO Co., Ltd.) is applied to a surface at room temperature, and left still for about five minutes. Thereafter, the coating film is peeled by being scrubbed with a hard sponge or the like (for example, Kanefeel, manufactured by AION Co., Ltd.). Then, the sample from which the coating film has been peeled is washed with water and dried. At this time, when the peeling of the coating film is insufficient, the coating film only needs to be removed by repeating the same process again. Further, the coating film can also be removed by a method of using a commercially-available coating remover or blast processing. Next, an acid solution in which plating components are dissolved is obtained by dissolving a portion of the plating layer with the solution containing an acid containing an inhibitor which inhibits corrosion of the base material steel sheet. The kind of acid is not particularly limited as long as it is an acid capable of dissolving the plating layer, and for example, a HCl aqueous solution or the like can be used. The obtained acid solution can be analyzed by the ICP-AES to obtain chemical components as total averages of the plating layer. Further, as long as an area of a side, subjected to plating, of the sample and masses of the sample before and after peeling the plating layer are measured, a plating coating weight (g/m²) of the surface-treated steel sheet can also be obtained at the same time. Note that a tape seal is applied to only one side of the sample to prevent the plating layer on this side from being dissolved in the acid solution before the dissolution caused by the acid, and thereby the coating weight of the Zn-containing plating layer 20 per side can also be determined.

Note that it is preferable that such a plating coating weight of the Zn-containing plating layer 20 as described above totals 30 g/m² or more on both sides of the steel sheet (that is, it is 15 g/m² or more per side). Setting the coating weight to 30 g/m² or more allows the corrosion resistance as the zinc-based plated steel sheet to be certainly secured. The plating coating weight more preferably totals 40 g/m² or more on both sides of the steel sheet. On the other hand, it is preferable that the plating coating weight totals 600 g/m² or less on both sides of the steel sheet (that is, it is 300 g/m² or less per side). Setting the coating weight to 600 g/m² or less allows the corrosion resistance to be further improved while securing smoothness on the surface of the Zn-containing plating layer 20. The plating coating weight more preferably totals 550 g/m² or less on both sides of the steel sheet.

### <Regarding primer coating layer 30>

The primer coating layer 30 is provided on such a Zn-containing plating layer 20 as described above. The primer coating layer 30 according to this embodiment contains a vanadium compound as a rust preventive pigment for improving the corrosion resistance.

When water containing an acid or alkaline component adheres to a surface of the surface-treated steel sheet 1 according to this embodiment, the water containing this acid or alkaline component may permeate through the upper coating layer 40 and the primer coating layer 30 to reach the surface of the Zn-containing plating layer 20 or the chemical treatment coating layer 50. At this time, the vanadium compound is contained in the primer coating layer 30, and thereby the vanadium compound dissolves in the entered water containing the acid or alkaline component to release vanadic acid ions. Such vanadic acid ions react with the metals on the surface of the Zn-containing plating layer 20 or the chemical treatment coating layer 50 to produce various salts. The produced salts form a dense barrier layer near an interface of the Zn-containing plating layer 20 or the chemical treatment coating layer 50, thereby improving the corrosion resistance of the surface-treated steel sheet 1.

As such vanadium compounds, for example, there can be used various vanadates such as calcium vanadate, magnesium vanadate, ammonium metavanadate, potassium vanadate, sodium vanadate, ammonium vanadate, and phosphorus vanadate, vanadium oxide, and the like. Among such vanadium compounds, in particular, the vanadium compound composed of pentavalent vanadium is preferably used. Further, from the reason why a balance between corrosion resistance and water resistance is good by having suitable solubility, calcium vanadate, magnesium vanadate, or ammonium metavanadate is preferably used. These vanadium compounds may be contained alone, or may be contained by combining the plurality of kinds. Incidentally, vanadium pentoxide is preferably not used due to toxicity.

In the primer coating layer 30 according to this embodiment, such vanadium compounds are each preferably contained in a state of particles. In more detail, in the primer coating layer 30 according to this embodiment, the vanadium compounds are each preferably in a state of the particles whose average particle diameter is in a range of 0.05 to 2.00 µm.

The average particle diameter of the vanadium compound is 0.05 µm or more, thereby making it possible to improve the corrosion resistance while suppressing thermal diffusion to the upper coating layer of the vanadium compound when the upper coating layer is applied, and, dried and heated. The average particle diameter of the vanadium compound is more preferably 0.10 µm or more, and further preferably 0.50 µm or more.

On the other hand, the average particle diameter of the vanadium compound is 2.00 µm or less, thereby making it possible to facilitate a fixation of the vanadium compound to the vicinity of the interface on the plating layer side while suppressing an uneven distribution in a horizontal direction of the coating film. The average particle diameter of the vanadium compound is more preferably 1.50 µm or less, and further preferably 1.00 µm or less.

Note that the average particle diameter of the vanadium compound contained in the primer coating layer 30 can be measured in the following manner.

First, the surface-treated steel sheet 1 as a target is cut into a suitable size, and embedded in resin so that a cross section in a sheet thickness direction can be seen, and the cross section is polished. Thereafter, a cross section observation of the obtained polished surface is performed using a scanning electron microscope (SEM) provided with an electron probe micro analyzer (EPMA). In more detail, an EPMA mapping analysis is performed at a magnification of 6000 times on the primer coating layer 30 in the cross section (polished surface) (acceleration voltage: 15 kV). At this time, V is selected as a detection target element, and mapping shooting of a presence position and an element concentration of the V element is performed.

Next, all of the vanadium compounds on a SEM image are specified by performing SEM imaging at a magnification of 6000 times on the same position of the same sample and comparing the SEM image with the previous EPMA mapping image. On the SEM image, with 20 µm in a plane direction of the steel sheet set as a measurement range, particle diameters (the longest diameter when the particle is not a perfect circle: the major axis) of all the vanadium compounds present in the primer coating layer 30 in the range are measured. Based on that, an average value of the vanadium compounds is calculated using the obtained measured values of the particle diameters to set the obtained average value as the average particle diameter of the vanadium compounds. Here, when a plurality of the vanadium compounds aggregate, the aggregated compounds only need to be regarded as one piece to measure the particle diameter (major axis).

Further, the primer coating layer 30 according to this embodiment preferably contains a film-forming component for holding the primer coating layer 30 as the coating film in addition to the above vanadium compound.

In more detail, the primer coating layer 30 according to this embodiment preferably contains a binder resin as the film-forming component.

As the binder resin contained in the primer coating layer 30, for example, there can be used a high-molecular polyester resin, a polyester resin, an acrylic resin, an epoxy resin, a urethane resin, a fluorocarbon resin, or the like. Further, ones in which film-formable resin components such as modified resins of these resins are each crosslinked by a crosslinking agent component of a butylated melamine resin, a methylated melamine resin, a butyl-methyl mixed melamine resin, a urea resin, an isocyanate resin, or mixtures of these resins, or the like can also be used. Further, as the binder resin, an electron beam curable resin, an ultraviolet curable resin, or the like may be used.

Further, as the crosslinking agent used for the binder resin as described above, for example, an isocyanate-based curing agent is particularly preferably used. For example, one in which the film-formable resin component composed of the polyester resin is crosslinked using the isocyanate-based curing agent is preferably used. The coating film formed by isocyanate curing can further improve the adhesion with respect to the Zn-containing plating layer 20 to further improve the corrosion resistance by making a crosslinking point into a dense urethane bond therein and reacting with a hydroxyl group (-OH) present on a plating surface.

Note that as a method of confirming that the binder resin is caused by the isocyanate curing, the following method is present. First, the targeted surface-treated steel sheet is cut into a suitable size, embedded in resin, and polished in the cross-sectional direction. Thereafter, IR measurement only needs to be performed on the primer coating layer of the cross section by a method such as a micro FT-IR spectrometer (Fourier transform infrared spectroscopy) to confirm an absorption peak of the urethane bond near 1550 cm⁻¹ and a C=N absorption peak derived from isocyanate appearing near 2260 cm⁻¹.

Here, as the isocyanate resins used as the curing agent, for example, there can be cited ones in which a monomer, a dimer, and a trimer of various kinds of isocyanate represented by IPDI (isophorone diisocyanate), TDI (tolylene diisocyanate), MDI (4,4'-diphenylmethane diisocyanate), HMDI (hexamethylene diisocyanate), hydrogenated MDI, hydrogenated XDI (xylylene diisocyanate), hydrogenated TDI, and the like, and, prepolymers having these isocyanates as a skeletal structure are blocked by blocking agents represented by methanol, ethanol, butanol, propanol, phenol, cresol, chlorophenol, nitrophenol, hydrophenol, acetylacetone, ethyl acetoacetate, ethyl malonate, lactam, phosgene, 1-chloro-2propanol, MEK-oximes, and the like. However, the kind of isocyanate resin and the kind of blocking agent are not limited to the above ones. As the isocyanate resin, lactam-blocked MDI or MEK-oxime-blocked IPDI is particularly preferably used.

In the primer coating layer 30 according to this embodiment, a glass transition point Tg of the film-forming component composed of such components as described above is preferably 0°C or more. The glass transition point Tg of the film-forming component is 0°C or more, thereby making it possible to prevent a decrease in the corrosion resistance due to a shortage of cohesive force of the primer coating layer 30, and to suppress the thermal diffusion of the vanadium compound to the upper coating layer 40 when the upper coating layer 40 is applied, and, dried and heated. Moreover, such a relation of hardness as described in detail below again is likely to be further achieved with respect to the upper coating layer 40, which is thus preferable. The glass transition point Tg of the film-forming component is more preferably 5°C or more, and further preferably 10°C or more.

On the other hand, the glass transition point Tg of the film-forming component is preferably 40°C or less. The film-forming component of the primer coating layer 30 is 40°C or less, thereby making it possible to prevent a decrease in workability caused by the primer coating layer 30 becoming too hard. Moreover, such a relation of hardness as described in detail below again is likely to be further achieved with respect to the upper coating layer 40, which is thus preferable. The glass transition point Tg of the film-forming component is more preferably 35°C or less, and further preferably 30°C or less.

Note that such a glass transition point Tg can be specified by scraping the coating film targeted for measurement off and providing the obtained sample for differential scanning calorimetry (DSC), or the like, for example.

In the primer coating layer 30 according to this embodiment, a content of the above vanadium compound is in a range of 5 to 50 mass% relative to a total solid content mass of the primer coating layer 30, a content of the film-forming component is in a range of 30 to 80 mass% relative to the total solid content mass of the primer coating layer 30, and it is preferable to contain the vanadium compound and the film-forming component so that a total content of the vanadium compound and the film-forming component is 100 mass% or less of the total solid content mass of the primer coating layer 30.

The content of the vanadium compound is 5 mass% or more relative to the total solid content mass of the primer coating layer 30, and thereby the surface-treated steel sheet 1 according to this embodiment can achieve more excellent corrosion resistance. The content of the vanadium compound is more preferably 10 mass% or more, and further preferably 15 mass% or more. On the other hand, the content of the vanadium compound is 50 mass% or less relative to the total solid content mass of the primer coating layer 30, thereby making it possible to achieve more excellent corrosion resistance while suppressing a decrease in workability and heat yellowing resistance. The content of the vanadium compound is more preferably 40 mass% or less, and further preferably 30 mass% or less.

Further, the content of the film-forming component is 30 mass% or more relative to the total solid content mass of the primer coating layer 30, thereby making desired heat yellowing resistance and workability likely to be achieved as the whole of the primer coating layer 30. The content of the film-forming component is more preferably 40 mass% or more, and further preferably 50 mass% or more. On the other hand, the content of the film-forming component is 80 mass% or less relative to the total solid content mass of the primer coating layer 30, thereby containing the rust preventive pigment to facilitate suppression of a decrease in the corrosion resistance. The content of the film-forming component is more preferably 70 mass% or less, and further preferably 65 mass% or less.

Here, the contents of the vanadium compound and the film-forming component in the primer coating layer 30 are almost the same values as contents of the vanadium compound and the film-forming component contained in a primer coating material used for forming the primer coating layer 30.

Note that when the contents of the vanadium compound and the film-forming component as described above are measured from a state of the already-manufactured surface-treated steel sheet, a glow discharge spectrometry (GDS) only needs to be used, for example. The focused coating film is subjected to sputtering from the surface toward the plating layer, and a concentration profile in a depth direction is measured regarding a main element composing the primer coating layer 30. Thereafter, an average value of the measured concentration of the main element in the primer coating layer 30 is found, and when a specific kind of the vanadium compound is clear, the measured concentration is converted based on a molecular weight of the known vanadium compound to calculate an average concentration of the vanadium compound in the primer coating layer 30. When the specific kind of the vanadium compound is not clear, a concentration only needs to be measured from a cross section of the primer coating layer 30 by such a method as described above after specifying the kind of the vanadium compound by performing an elemental analysis on the vanadium compound using a field emission-electron probe micro analyzer (FE-EPMA). A concentration of the film-forming component can be calculated by subtracting mass% of the vanadium compound calculated by the above method from 100 mass%.

The primer coating layer 30 according to this embodiment may contain a rust preventive pigment other than such a vanadium compound as described above. As such a rust preventive pigment, for example, there can be used an optional one of calcium ion-exchanged silica (which is sometimes called calcium silicate as a common name.), aluminum tripolyphosphate, zinc phosphate, iron phosphate, aluminum phosphate, magnesium phosphate, magnesium oxide, calcium molybdate, aluminum molybdate, barium molybdate, water-dispersible silica, fumed silica, orthophosphoric acid, pyrophosphoric acid, metaphosphoric acid, hypophosphoric acid, phosphorous acid, hypophosphorous acid, salts of these, and the like. When such a rust preventive pigment is contained, a total content of the rust preventive pigment including the vanadium compound is preferably not less than 20 mass% nor more than 60 mass% relative to the total solid content mass of the primer coating layer 30. The total content of the rust preventive pigment including the vanadium compound is more preferably not less than 35 mass% nor more than 50 mass%. Further, the primer coating layer 30 according to this embodiment may further contain precipitated barium sulfate, an extender such as clay, or a color pigment such as titanium oxide as necessary. Moreover, the primer coating layer 30 according to this embodiment may contain an additive such as a coloring agent, a viscosity modifier, a leveling agent, a defoamer, or an ultraviolet absorbent as necessary other than such a rust preventive pigment, an extender, or a color pigment as described above.

An average thickness of the primer coating layer 30 (a thickness dp in FIG. 1A to FIG. 2B) according to this embodiment is in a range of 3.0 to 15.0 µm. The average thickness of the primer coating layer 30 is 3.0 µm or more, thereby making it possible to achieve excellent corrosion resistance. The average thickness of the primer coating layer 30 is preferably 4.0 µm or more. On the other hand, the average thickness of the primer coating layer 30 is 15.0 µm or less, thereby making it possible to achieve excellent corrosion resistance while suppressing a decrease in the workability. The average thickness of the primer coating layer 30 is preferably 10.0 µm or less.

Note that the average thickness of the primer coating layer 30 can be measured by a direct observation from the cross section. Specifically, the surface-treated steel sheet 1 is embedded in a room temperature drying-type epoxy resin so that the cross section can be observed, and the embedded surface is subjected to mechanical polishing, and thereafter observed by the SEM. Thicknesses only need to be measured at a plurality of arbitrary positions (for example, ten positions) to regard an average value of a plurality of the obtained thicknesses as the average thickness of the primer coating layer 30.

### <Regarding upper coating layer 40>

The surface-treated steel sheet 1 according to this embodiment has the upper coating layer 40 on such a primer coating layer 30 as described above. Such an upper coating layer 40 contains the film-forming component according to uses, and can form a coating film in a single layer or multiple layers.

The upper coating layer 40 according to this embodiment preferably contains the binder resin as the film-forming component. As such a binder resin, for example, there can be used a high-molecular polyester resin, a polyester resin, an acrylic resin, an epoxy resin, a urethane resin, a fluorocarbon resin, or the like. Further, ones in which film-formable resin components such as modified resins of these resins are each crosslinked by the crosslinking agent component of a butylated melamine resin, a methylated melamine resin, a butyl-methyl mixed melamine resin, a urea resin, an isocyanate resin, or mixtures of these resins, or the like can also be used. Further, as the binder resin, an electron beam curable resin, an ultraviolet curable resin, or the like may be used.

In the upper coating layer 40 according to this embodiment, a glass transition point Tg of the film-forming component composed of such components as described above is preferably 40°C or more. The glass transition point Tg of the film-forming component is 40°C or more, thereby making it possible to prevent a decrease in the corrosion resistance due to a shortage of cohesive force of the upper coating layer 40, and to suppress the thermal diffusion of the vanadium compound from the primer coating layer 30 to the upper coating layer 40 when the upper coating layer 40 is applied, and, dried and heated. Moreover, such a relation of hardness as described in detail below again is likely to be further achieved with respect to the primer coating layer 30, which is thus preferable. The glass transition point Tg of the film-forming component is more preferably 45°C or more, and further preferably 50°C or more.

On the other hand, the glass transition point Tg of the film-forming component is preferably 70°C or less. The film-forming component of the upper coating layer 40 is 70°C or less, thereby making it possible to prevent a decrease in the workability caused by the upper coating layer 40 becoming too hard. Moreover, such a relation of hardness as described in detail below again is likely to be further achieved with respect to the primer coating layer 30, which is thus preferable. The glass transition point Tg of the film-forming component is more preferably 65°C or less, and further preferably 60°C or less.

Here, such a glass transition point Tg can be measured by the differential scanning calorimetry (DSC) or the like in a similar manner to the above.

The upper coating layer 40 according to this embodiment may further contain, as the film-forming component, a color pigment capable of achieving such a hue as makes yellowing of the coating film less likely to be visually recognized. This makes the yellowing of the coating film less likely to be visually recognized from the outside as the whole of the surface-treated steel sheet 1.

As such a color pigment, for example, various aluminum pigments can be cited. The upper coating layer 40 further contains the aluminum pigment, and thereby the upper coating layer 40 exhibits a metallic appearance, so that the yellowing of the coating film is less likely to be visually recognized from the outside.

Further, well-known inorganic color pigments and organic color pigments can be used as the color pigment other than such aluminum pigments as described above. As the inorganic color pigments, for example, there can be used titanium oxide, zinc oxide, zirconium oxide, calcium carbonate, barium sulfate, kaolin clay, carbon black, iron oxide, and the like. Further, as the organic color pigments, for example, there can be used Hansa yellow, pyrazolone orange, phthalocyanine, an azo-based pigment, and the like.

An average thickness of the upper coating layer 40 (a thickness du in FIG. 1A to FIG. 2B) according to this embodiment is in a range of 7.0 to 25.0 µm. The average thickness of the upper coating layer 40 is 7.0 µm or more, thereby making it possible to achieve excellent corrosion resistance. The average thickness of the upper coating layer 40 is preferably 10.0 µm or more. On the other hand, the average thickness of the upper coating layer 40 is 25.0 µm or less, thereby making it possible to achieve excellent corrosion resistance while suppressing a decrease in the workability. The average thickness of the upper coating layer 40 is preferably 20.0 µm or less.

Here, the average thickness of the upper coating layer 40 can be measured in a similar manner to the average thickness of the primer coating layer 30.

### <Regarding relation of Vickers hardness between primer coating layer 30 and upper coating layer 40>

In the surface-treated steel sheet 1 according to this embodiment, a Vickers hardness of the primer coating layer 30 is lower than a Vickers hardness of the upper coating layer 40, and a difference between the Vickers hardness of the upper coating layer 40 and the Vickers hardness of the primer coating layer 30 is in a range of 5 to 50 Hv.

The Vickers hardness of the primer coating layer 30 is lower than the Vickers hardness of the upper coating layer 40 (in other words, the Vickers hardness of the upper coating layer 40 is higher than the Vickers hardness of the primer coating layer 30), thereby allowing vanadium to be less likely to physically enter the interior of the upper coating layer 40. This makes it possible to prevent the thermal diffusion to the upper coating layer 40 of the vanadium compound in the primer coating layer 30 when the surface-treated steel sheet 1 is exposed to heat. Further, the Vickers hardness of the primer coating layer 30 is lower than the Vickers hardness of the upper coating layer 40, thereby making it possible to relax a stress applied to the surface-treated steel sheet 1 in the primer coating layer 30. This prevents peeling of the coating layer from the surface-treated steel sheet, so that work adhesion of the surface-treated steel sheet can be held.

Specifically, the Vickers hardness of the primer coating layer 30 is 20 Hv or less, and the Vickers hardness of the upper coating layer 40 is in a range of 25 Hv to 70 Hv.

Here, the Vickers hardness of the primer coating layer 30 is preferably 15 Hv or less. Note that a lower limit value of the Vickers hardness of the primer coating layer 30 is not particularly specified, but the lower limit is practically about 5 Hv. Further, the Vickers hardness of the primer coating layer 30 is preferably 10 Hv or more.

Further, the Vickers hardness of the upper coating layer 40 is preferably in a range of 28 Hv to 65 Hv.

Further, when the difference between the Vickers hardness of the upper coating layer 40 and the Vickers hardness of the primer coating layer 30 is less than 5 Hv, the thermal diffusion of the vanadium compound as described above cannot be prevented. Thus, the difference between the Vickers hardness of the upper coating layer 40 and the Vickers hardness of the primer coating layer 30 is set to 5 Hv or more. This makes it possible to achieve an improvement in the heat yellowing resistance in the surface-treated steel sheet 1 according to this embodiment. The difference between the Vickers hardness of the upper coating layer 40 and the Vickers hardness of the primer coating layer 30 is preferably 10 Hv or more.

On the other hand, when the difference between the Vickers hardness of the upper coating layer 40 and the Vickers hardness of the primer coating layer 30 is more than 50 Hv, the upper coating layer 40 is too hard, resulting in failing to achieve desired work adhesion. Thus, the difference between the Vickers hardness of the upper coating layer 40 and the Vickers hardness of the primer coating layer 30 is set to 50 Hv or less. The difference between the Vickers hardness of the upper coating layer 40 and the Vickers hardness of the primer coating layer 30 is preferably 40 Hv or less.

Note that such a relation of the Vickers hardness between the primer coating layer 30 and the upper coating layer 40 as described above can be achieved by adjusting the kind and the compounding condition of the film-forming component composing each of the coating layers and controlling a degree of a crosslink density in each of the coating layers.

Note that the Vickers hardness of the primer coating layer 30 is specified by measuring a predetermined position of the primer coating layer 30 in a cross section in a thickness direction of the primer coating layer 30. In more detail, the surface-treated steel sheet 1 on which attention is focused is embedded in the room temperature drying-type epoxy resin so that the cross section can be observed, and the embedded surface is subjected to mechanical polishing. A position of an interface between the primer coating layer 30 and the layer located on the base material steel sheet 10 side further than the primer coating layer 30 is specified in the obtained cross section. A Vickers indenter (quadrangular pyramid diamond indenter) is inserted over the course of ten seconds to a depth of 1 µm with respect to a position of 1 µm toward a direction of the upper coating layer 40 side from such an interface using a commercially available hardness meter capable of performing an indentation test in conformity to ISO14577 (for example, FISCHERSCOPE HM2000 manufactured by FISCHER INSTRUMENTS K.K., or the like), to measure the Vickers hardness. Such measurement only needs to be performed at a plurality of positions (for example, ten positions), each of which is the position of 1 µm toward the direction on the upper coating layer 40 side from the interface, to set an average value of the obtained measured values as the Vickers hardness of the primer coating layer 30.

Further, the Vickers hardness of the upper coating layer 40 is measured by inserting the indenter from a surface of the upper coating layer 40 according to the indentation test in conformity to ISO14577. In more detail, the Vickers hardness is measured by inserting the indenter over the course of ten seconds to a position of a depth of 5 µm from the surface of the upper coating layer 40 using the commercially available hardness meter (for example, FISCHERSCOPE HM2000 manufactured by FISCHER INSTRUMENTS K.K., or the like). Such measurement only needs to be performed at a plurality of positions (for example, ten positions) on the surface of the upper coating layer 40 to set an average value of the obtained measured values as the Vickers hardness of the upper coating layer 40.

### <Regarding chemical treatment coating layer 50>

The chemical treatment coating layer 50 according to this embodiment is a layer formed by various kinds of chemical treatment between the Zn-containing plating layer 20 and the primer coating layer 30 as necessary.

The chemical treatment coating layer 50 according to this embodiment contains one or more selected from a group consisting of, for example, a silane coupling agent, a resin, a zirconium compound, silica, phosphoric acid and its salts, fluoride, a vanadium compound, and, tannin or tannic acid. The chemical treatment coating layer 50 according to this embodiment contains such components as described above, and thereby the film formability after application of a chemical treatment solution, the barrier property (denseness) of the coating against corrosive factors such as moisture and corrosive ions, the coating film adhesion to the plated surface, and so on further improve, which allows a contribution to the improvement in the corrosion resistance of the coating film.

In the following, details of components which the chemical treatment coating layer 50 as described above may contain will be explained while citing an example.

### [Silane coupling agent]

As the silane coupling agent, for example, there can be cited 3-(2-aminoethyl)aminopropyltrimethoxysilane, 3-(2-aminoethyl)aminopropylmethyldimethoxysilane, 3-(2-aminoethyl)aminopropyltriethoxysilane, 3-(2-aminoethyl)aminopropylmethyldiethoxysilane, 3-(2-aminoethyl)aminopropylmethyldimethoxysilane, 3-methacryloxypropyltrimethoxysilane, 3-methacryloxypropylmethyldimethoxysilane, 3-methacryloxypropyltriethoxysilane, 3-methacryloxypropylmethyldiethoxysilane, N-2-(N-vinylbenzylaminoethyl)-3-aminopropyltrimethoxysilane, N-2-(N-vinylbenzylaminoethyl)-3-aminopropylmethyldimethoxysilane, N-2-(N-vinylbenzylaminoethyl)-3-aminopropyltriethoxysilane, N-2-(N-vinylbenzylaminoethyl)-3-aminopropylmethyldiethoxysilane, 3-mercaptopropyltrimethoxysilane, 3-mercaptopropylmethyldimethoxysilane, 3-mercaptopropyltriethoxysilane, 3-mercaptopropylmethyldiethoxysilane, methyltrimethoxysilane, dimethyldimethoxysilane, methyltriethoxysilane, dimethyldiethoxysilane, vinyltriacetoxysilane, 3-chloropropyltrimethoxysilane, 3-chloropropylmethyldimethoxysilane, 3-chloropropyltriethoxysilane, 3-chloropropylmethyldiethoxysilane, 3-anilinopropyltrimethoxysilane, 3-anilinopropylmethyldimethoxysilane, 3-anilinopropyltriethoxysilane, 3-anilinopropylmethyldiethoxysilane, vinyltrimethoxysilane, vinylmethyldimethoxysilane, vinyltriethoxysilane, vinylmethyldiethoxysilane, octadecyldimethyl[3-(trimethoxysilyl)propyl]ammonium chloride, octadecyldimethyl[3-(methyldimethoxysilyl)propyl]ammonium chloride, octadecyldimethyl[3-(triethoxysilyl)propyl]ammonium chloride, octadecyldimethyl[3-(methyldiethoxysilyl)propyl]ammonium chloride, 3-chloropropylmethyldimethoxysilane, 3-mercaptopropylmethyldimethoxysilane, methyltrichlorosilane, dimethyldichlorosilane, trimethylchlorosilane, and so on. The added amount of the silane coupling agent in a chemical treatment agent for forming the chemical treatment coating layer 50 can be set to 2 to 80 g/L, for example. When the added amount of the silane coupling agent is less than 2 g/L, the adhesion to the plated surface may be insufficient, leading to a decrease in the work adhesion of the coating layer. Further, when the added amount of the silane coupling agent exceeds 80 g/L, the cohesive force of the chemical treatment coating layer 50 may be insufficient, leading to a decrease in the work adhesion of the coating layer. The silane coupling agents as described as an example above may be used alone or in combination of two or more.

### [Zirconium compound]

As the zirconium compound, for example, there can be cited zirconium normal propylate, zirconium normal butyrate, zirconium tetraacetylacetonate, zirconium monoacetylacetonate, zirconium bisacetylacetonate, zirconium monoethylacetoacetate, zirconium acetylacetonate bisethylacetoacetate, zirconium acetate, zirconium monostearate, zirconium carbonate, zirconium ammonium carbonate, potassium zirconium carbonate, sodium zirconium carbonate, and so on. The added amount of the zirconium compound in the chemical treatment agent for forming the chemical treatment coating layer 50 can be set to 2 to 80 g/L, for example. When the added amount of the zirconium compound is less than 2 g/L, the adhesion to the plated surface may be insufficient, leading to a decrease in the work adhesion of the coating layer. Further, when the added amount of the zirconium compound exceeds 80 g/L, the cohesive force of the chemical treatment coating layer 50 may be insufficient, leading to a decrease in the work adhesion of the coating layer. Such zirconium compounds may be used alone or in combination of two or more.

### [Resin]

The resin is not particularly limited, and for example, well-known organic resins such as a polyester resin, a polyurethane resin, an epoxy resin, a phenol resin, an acrylic resin, and a polyolefin resin can be used. To further improve the adhesion to the plated steel sheet, it is preferable to use at least one of resins having forced sites or polar functional groups in a molecular chain (such as a polyester resin, a urethane resin, an epoxy resin, and an acrylic resin). The resins may be used alone or in combination of two or more.

A content of the resin in the chemical treatment coating layer 50 is preferably 0 mass% or more and more preferably 1 mass% or more relative to the coating solid content, for example. Further, the content of the resin in the chemical treatment coating layer 50 is preferably 85 mass% or less, more preferably 60 mass% or less, and further preferably 40 mass% or less relative to the coating solid content, for example. When the content of the resin exceeds 85%, the proportion of the other coating components decreases, resulting in that the performance required as the coating film other than corrosion resistance may decrease.

### [Silica]

As the silica, for example, there can be used commercially available silica gels such as "SNOWTEX N," "SNOWTEX C," "SNOWTEX UP," and "SNOWTEX PS" manufactured by Nissan Chemical Corporation, and "ADELITE AT-20Q" manufcturead by ADEKA CORPORATION, or powdered silica such as AEROSIL #300 manufactured by NIPPON AEROSIL CO., LTD., or ones equivalent to these pieces of commercially available silica. The silica can be appropriately selected according to the required performance of the surface-treated steel sheet. The added amount of the silica in the chemical treatment agent for forming the chemical treatment coating layer 50 is preferably set to, for example, 1 to 40 g/L. When the added amount of the silica is less than 1 g/L, the work adhesion of the coating layer may decrease, and when the added amount of the silica exceeds 40 g/L, the effects of work adhesion and corrosion resistance are likely to be saturated, which is uneconomical.

### [Phosphoric acid and Its salt]

As the phosphoric acid and its salt, for example, there can be cited phosphoric acids such as orthophosphoric acid, metaphosphoric acid, pyrophosphoric acid, triphosphoric acid, and tetraphosphoric acid and salts thereof, ammonium salts such as triammonium phosphate and diammonium hydrogen phosphate, phosphonic acids such as aminotri(methylenephosphonic acid), 1-hydroxyethylidene-1,1-diphosphonic acid, ethylenediaminetetra(methylenephosphonic acid), and diethylenetriaminepenta(methylenephosphonic acid) and salts thereof, organic phosphoric acids such as phytic acid and salts thereof, and so on. Incidentally, as salts of phosphoric acid other than ammonium salts, there can be cited metal salts with Na, Mg, Al, K, Ca, Mn, Ni, Zn, Fe, and so on. The phosphoric acid and its salt may be used alone or in combination of two or more.

Incidentally, a content of the phosphoric acid and its salt is preferably 0 mass% or more and more preferably 1 mass% or more relative to the coating solid content, for example. Further, the content of the phosphoric acid and its salt is preferably 20 mass% or less and more preferably 10 mass% or less relative to the coating solid content, for example. When the content of the phosphoric acid and its salt exceeds 20 mass%, the coating becomes brittle and the work followability of the coating when the surface-treated steel sheet is molded may decrease.

### [Fluoride]

As the fluoride, for example, there can cited ammonium zirconium fluoride, ammonium silicofluoride, ammonium titanium fluoride, sodium fluoride, potassium fluoride, calcium fluoride, lithium fluoride, titanium hydrofluoride, zirconium hydrofluoride, and so on. Such fluorides may be used alone or in combination of two or more.

Incidentally, a content of the fluoride is preferably 0 mass% or more and more preferably 1 mass% or more relative to the coating solid content, for example. Further, the content of the fluoride is preferably 20 mass% or less and more preferably 10 mass% or less relative to the coating solid content, for example. When the content of the fluoride exceeds 20 mass%, the coating becomes brittle and the work followability of the coating when the surface-treated steel sheet is molded may decrease.

### [Vanadium compound]

As the vanadium compound, for example, there can be cited vanadium compounds obtained by reducing pentavalent vanadium compounds such as vanadium pentoxide, metavanadic acid, ammonium metavanadate, sodium metavanadate, and vanadium oxytrichloride to 2 to 4 valences with a reducing agent, vanadium compounds with oxidation numbers of 4 to 2 valences, such as vanadium trioxide, vanadium dioxide, vanadium oxysulfate, vanadium oxyoxalate, vanadium oxyacetylacetonate, vanadium acetylacetonate, vanadium trichloride, phosphovanadomolybdic acid, vanadium sulfate, vanadium dichloride, and vanadium oxide, and so on. Such vanadium compounds may be used alone or in combination of two or more.

Incidentally, a content of the vanadium compound is preferably 0 mass% or more and more preferably 1 mass% or more relative to the coating solid content, for example. Further, the content of the vanadium compound is preferably 20 mass% or less and more preferably 10 mass% or less relative to the coating solid content, for example. When the content of the vanadium compound exceeds 20 mass%, the coating becomes brittle and the work followability of the coating when the surface-treated steel sheet is molded may decrease.

### [Tannin or tannic acid]

As the tannin or tannic acid, hydrolyzable tannin and condensed tannin both can be used. As an example of the tannin and the tannic acid, hamamelitannin, gall tannin, gallnut tannin, myrobalan tannin, divi-divi tannin, algarovilla tannin, valonia tannin, catechin, and so on can be cited. The added amount of the tannin or tannic acid in the chemical treatment agent for forming the chemical treatment coating 50 can be set to 2 to 80 g/L. When the added amount of the tannin or tannic acid is less than 2 g/L, the adhesion to the plated surface may be insufficient, leading to a decrease in the work adhesion of the coating layer. Further, when the added amount of the tannin or tannic acid exceeds 80 g/L, the cohesive force of the chemical treatment coating layer 50 may be insufficient, leading to a decrease in the work adhesion of the coating layer.

Further, acid, alkali, or the like may be added to the chemical treatment agent for forming the chemical treatment coating layer 50 in order to adjust pH within a range that does not impair the performance.

Such a chemical treatment agent containing various components as described above is applied on one surface or both surfaces of the zinc-based plated steel sheet 10, and then dried to form the chemical treatment coating layer 50. In the surface-treated steel sheet according to this embodiment, it is preferable to form the chemical treatment coating layer 50 of 100 mg/m² or more per side on the Zn-containing plating layer 20. The coating weight of the chemical treatment coating layer 50 is more preferably 200 mg/m² or more and further preferably 500 mg/m² or more. Further, in the surface-treated steel sheet according to this embodiment, it is preferable to form the chemical treatment coating layer 50 of 1000 mg/m² or less per side on the Zn-containing plating layer 20. The coating weight of the chemical treatment coating layer 50 is more preferably 800 mg/m² or less and further preferably 600 mg/m² or less. Incidentally, the film thickness of the chemical treatment coating layer 50 corresponding to such a coating weight is about 0.1 to 1.0 µm, depending on the components contained in the chemical treatment agent. Incidentally, the film thickness of such a chemical treatment coating layer 50 can be measured by a direct observation of the cross section.

The above has explained the surface-treated steel sheet 1 according to this embodiment in detail with reference to FIG. 1A to FIG. 2B.

### (Regarding manufacturing method of surface-treated steel sheet)

An example of a manufacturing method of the surface-treated steel sheet according to this embodiment will be briefly explained below.

First, the steel sheet serving as the base material is subjected to various kinds of pretreatment such as alkali degreasing treatment, washing treatment, and pickling treatment to have a clean steel sheet surface. Thereafter, the Zn-containing plating layer is formed on such a surface of the base material steel sheet. In such a plating process, a plating bath having components capable of achieving a desired plating composition only needs to be prepared to form the Zn-containing plating layer according to various well-known methods.

Various kinds of well-known chemical treatment for forming the chemical treatment coating layer are performed on the steel sheet on which the Zn-containing plating layer has been formed, as necessary. For example, such a chemical treatment agent containing such desired components as described above only needs to be prepared to apply the chemical treatment agent to a surface of the Zn-containing plating layer. Here, the application of such a chemical treatment agent as described above can be performed by a commonly well-known coating method, such as, for example, roll coating, curtain flow coating, air spray, airless spray, immersion, bar coating, or brush coating.

For example, the primer coating layer is formed by applying a primer coating film-forming coating solution to the surface of the Zn-containing plating layer (or the chemical treatment coating layer) formed in the above manner, and heating and drying it. Here, the primer coating film-forming coating solution is prepared by containing such a vanadium compound as described above (more preferably, the vanadium compound and the film-forming component as described above, further the various additives as necessary) in a solvent. The application of the prepared coating solution can be performed by a commonly well-known coating method, such as, for example, roll coating, curtain flow coating, air spray, airless spray, immersion, bar coating, or brush coating similarly to the above.

Here, in the surface-treated steel sheet according to this embodiment, a convection of the coating solution during heating and drying is preferably inhibited to some degree in order to prevent the thermal diffusion of the vanadium compound when the surface-treated steel sheet is exposed to heat. In order to inhibit such a convection of the coating solution, it is important to heat and dry the coating solution by using an induction heating (IH) device and a hot-air drying device in combination in the manufacturing method of the surface-treated steel sheet according to this embodiment.

In more detail, by subjecting the plated steel sheet to induction heating while blowing hot air to the surface of the coating film, a viscosity near a surface of the applied primer coating film increases to inhibit the convection. This makes it possible to reduce a weight in which the vanadium compound is fixed on the surface side of the primer coating film (a position which is an interface on the upper coating layer side in applying the upper coating film) to improve the heat yellowing resistance.

The upper coating layer is formed by applying an upper coating film-forming coating solution to the surface of the primer coating layer formed in the above manner, and heating and drying it. Here, the upper coating film-forming coating solution is prepared by containing such a film-forming component as described above (further various additives as necessary) in the solvent. The application of the prepared coating solution can be performed by a commonly well-known coating method, such as, for example, roll coating, curtain flow coating, air spray, airless spray, immersion, bar coating, or brush coating similarly to the above.

Thereafter, the coating solution only needs to be heated and dried by an optional method of hot air, near infrared rays, extreme infrared rays, induction heating, a heating method by combinations of these, and the like.

The above has briefly explained the manufacturing method of the surface-treated steel sheet according to this embodiment.

Note that the present invention as explained above may be applied to various metal sheets other than the steel sheet, such as an aluminum sheet, a zinc sheet, a stainless sheet, and a titanium sheet. That is, the primer coating layer 30 and the upper coating layer 40 (further, the chemical treatment coating layer 50 as necessary) as described above may be provided on a surface of the various metal sheets other than the steel sheet.

### EXAMPLES

The surface-treated steel sheet according to the present invention will be specifically explained below with reference to examples and comparative examples. Incidentally, the examples to be explained below are merely examples of the surface-treated steel sheet according to the present invention, and the surface-treated steel sheet according to the present invention is not limited to the examples below.

### (1) Steel sheet

Four kinds of steel sheets of A1 to A4, indicated below, (all manufactured by NIPPON STEEL CORPORATION) were prepared. A steel sheet having a sheet thickness of 0.7 mm was used as a base material for the steel sheets. Further, plated steel sheets obtained by applying 60 mg/m² of chromate-free chemical treatment (CT-E300/manufactured by Nihon Parkerizing Co., Ltd.) to these steel sheets were also prepared. A treatment solution used for the chemical treatment contains a silane coupling agent as its component, and a coating layer formed by such a chemical treatment functions as a chemical treatment coating layer. Incidentally, whether the chemical treatment was applied or not applied was listed in Table 1-1 to Table 1-3 below.
A1: hot-dip galvanized steel sheet
A2: hot-dip Zn-6 mass% Al-3 mass% Mg plated steel sheet
A3: hot-dip Zn-11 mass% Al-3 mass% Mg-0.2 mass% Si plated steel sheet
A4: steel sheet (no plating)

### (2) Preparation of coating material for primer coating film

Coating materials to be used for forming primer coating layers were prepared. "VYLON 500 (Tg: 4°C)", "VYLON GK880 (Tg 84°C)", "VYLON 550 (Tg -15°C)" being polyester resins manufactured by TOYOBO CO., LTD. were dissolved in an organic solvent (one in which cyclohexanone and SOLVESSO 150 (brand name) were mixed at a mass ratio of 1:1). Here, glass transition points Tg of the primer coating layers after heating and drying were adjusted so as to have values shown in Table 1-1 to Table 1-3 by adjusting a mixture ratio of these polyester resins.

Next, isocyanate "Coronate 2536" (manufactured by Nippon Polyurethane Industry Co., Ltd.) was added as a curing agent. A mixture ratio between the polyester resins and the curing agent was set to 90:10 at a solid content mass ratio.

Further, as rust preventive pigments, five types of compounds of B1 to B5, indicated below, were prepared. These coating material compositions were compounded in predetermined particle diameters and predetermined amounts shown in Table 1-1 to Table 1-3 below to prepare primer coating materials.
B1: calcium vanadate
B2: magnesium vanadate
B3: calcium ion-exchanged silica
B4: aluminum tripolyphosphate
B5: magnesium oxide

### (3) Preparation of coating material for upper coating film

Coating materials to be used for forming upper coating films were prepared. "VYLON 500 (Tg: 4°C)", "VYLON GK880 (Tg 84°C)", "VYLON 550 (Tg -15°C)" being the polyester resins manufactured by TOYOBO CO., LTD. were dissolved in the organic solvent (one in which cyclohexanone and SOLVESSO 150 (brand name) were mixed at a mass ratio of 1:1) similarly to the above coating materials for primer coating film. Here, glass transition points Tg of the upper coating layers after heating and drying were adjusted so as to have values shown in Table 1-1 to Table 1-3 by adjusting a mixture ratio of these polyester resins.

Next, a melamine resin "CYMEL 235" (manufactured by Mitsui Chemicals, Inc.) was added as a curing agent. A mixture ratio between the polyester resins and the curing agent was set to 80:10 at a solid content mass ratio.

Further, as color pigments, commercially available titanium oxide for a pigment of a white coating film and commercially available aluminum flakes for a pigment of a metallic color coating film were respectively compounded in predetermined amounts shown in Table 1-1 to Table 1-3.

### (4) Sample fabrication

The coating materials for primer coating film prepared in the above manner were applied to a surface of the plated steel sheets so that average thicknesses after drying were dry film thicknesses listed in Table 1-1 to Table 1-3, and were dried and heated by the method listed in Table 1-1 to Table 1-3. Incidentally, when a hot-air drying device and an induction heating (IH) device were used in combination in Table 1-1 to Table 1-3 below, this is listed as "combined use". Thereafter, the prepared coating materials for upper coating film were applied so that average thicknesses after drying were dry film thicknesses listed in Table 1-1 to Table 1-3, and were dried and heated in an air heating furnace.

Regarding the obtained surface-treated steel sheets, Vickers hardnesses of the primer coating layers and the upper coating layers were measured in accordance with the previously explained method. Incidentally, in Table 1-1 to Table 1-3 below, values of "the Vickers hardness of the upper coating layer - the Vickers hardness of the primer coating layer" are each listed as a difference in Vickers hardness between the layers.

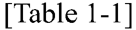

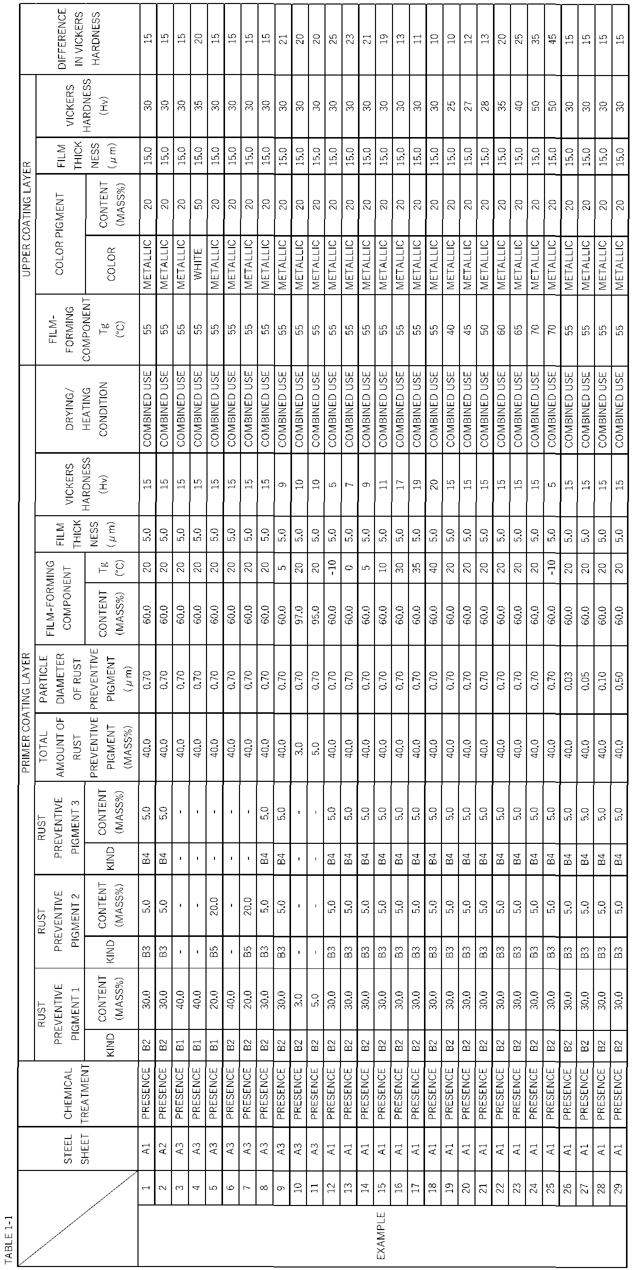

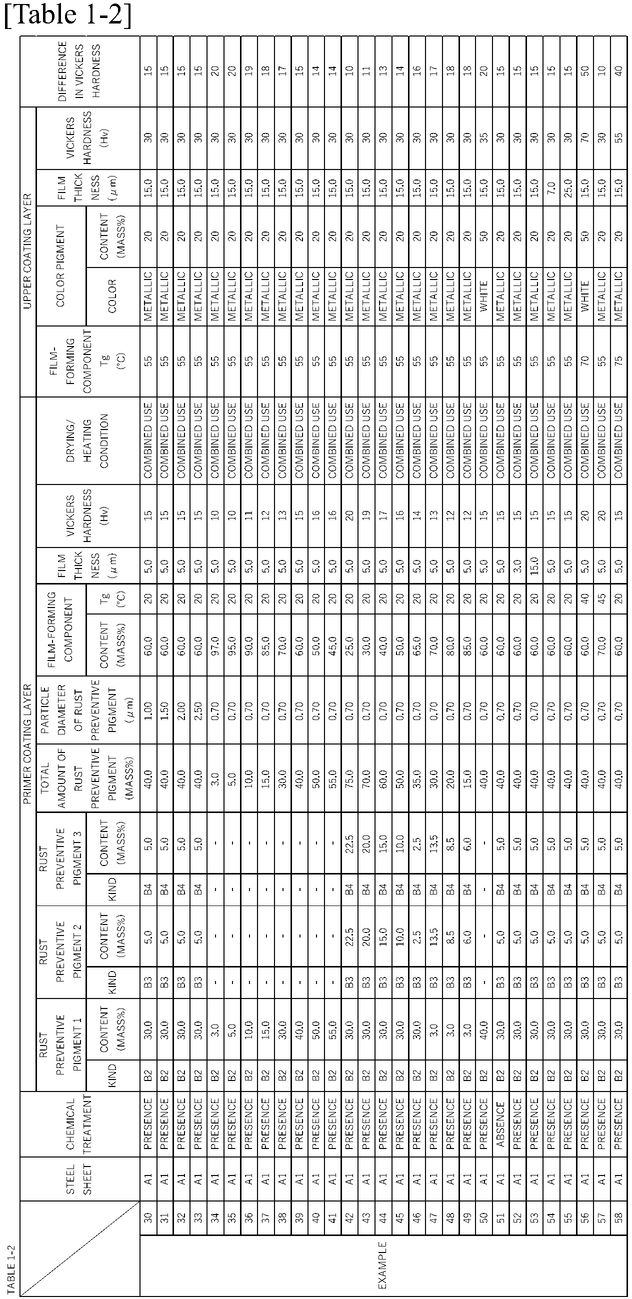

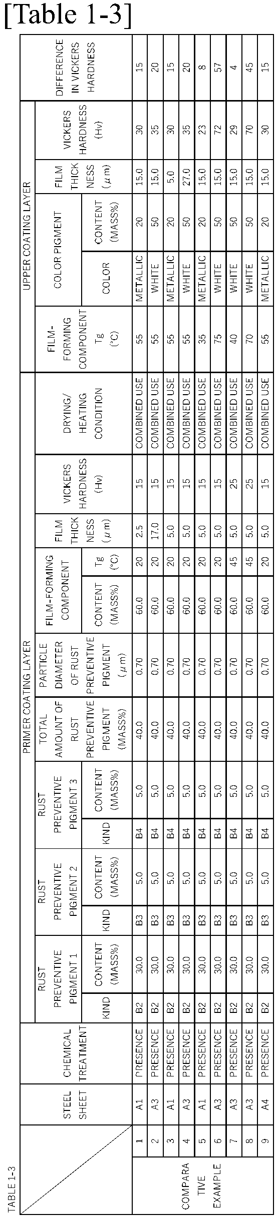

A plurality of test sheets were cut out from each of samples obtained in the above manner, and thereafter each test sheet was evaluated as follows in the viewpoints of heat yellowing resistance, corrosion resistance, and work adhesion. The obtained results were collectively shown in Table 2-1 to Table 2-3 below.

### <Heat yellowing resistance>

The heat yellowing resistance was evaluated based on such criteria as described below. The test sheets were held at a temperature of 180°C for 20 hours, and a change in color tone before and after the test (ΔE) was measured by a spectrophotometric colorimeter (color meter SC-T45 manufactured by Suga Test instruments Co., Ltd.). The evaluation was performed by the following evaluation criteria, and a grade 1 was set as a non-acceptance.
Grades 5: ΔE is less than 2
4: ΔE is 2 or more to less than 3
3: ΔE is 3 or more to less than 5
2: ΔE is 5 or more to less than 6
1: ΔE is 6 or more

### <Corrosion resistance>

The corrosion resistance was evaluated based on such criteria as described below. After sealing an end surface of each of the test sheets, a deep scratch reaching the base metal was made in an X shape in the coating films on a surface of the steel sheet by a cutter knife, and a salt spray test (SST) in conformity to JIS Z 2371: 2015 was performed for 360 hours. A one-side maximum blister width from the X-cut portion was measured, and the evaluation was performed by the following evaluation criteria. At this time, a grade 1 was set as a non-acceptance.
Grades 5: less than 3 mm
4: 3 mm or more to less than 4 mm
3: 4 mm or more to less than 5 mm
2: 5 mm or more to less than 6 mm
1: 6 mm or more

### <Work adhesion>

The work adhesion was evaluated based on such criteria as described below. A tape peeling test of performing 2T bending in a 20°C atmosphere, applying an adhesive tape (brand name: Sellotape (registered trademark)) to the outer side of a 2T bent portion, and peeling it off was performed on the test sheets. An external appearance of a tape peeling portion was observed to be evaluated by the following evaluation criteria. At this time, a grade 1 was set as a non-acceptance.

Grades 5: almost no coating film peeling is recognized (a peeling area of less than 2% from the bent portion).

4: coating film peeling is recognized in a small part thereof (a peeling area of 2% or more to less than 5% from the bent portion).

3: coating film peeling is recognized in a part thereof (a peeling area of 5% or more to less than 10% from the bent portion).

2: coating film peeling is partially recognized (a peeling area of 10% or more to less than 20% from the bent portion).

1: coating film peeling is recognized overall (a peeling area of 20% or more from the bent portion).

### [Table 2-1]

**TABLE 2-1**

| | | HEAT YELLOWING RESISTANCE | CORROSION RESISTANCE | WORK ADHESION |
|---|---|---|---|---|
| | 1 | 5 | 5 | 5 |
| | 2 | 5 | 5 | 5 |
| | 3 | 5 | 5 | 5 |
| | 4 | 4 | 5 | 4 |
| | 5 | 5 | 5 | 5 |
| | 6 | 5 | 5 | 5 |
| | 7 | 5 | 5 | 5 |
| | 8 | 5 | 5 | 5 |
| | 9 | 5 | 5 | 5 |
| | 10 | 5 | 4 | 5 |
| | 11 | 5 | 5 | 5 |
| | 12 | 4 | 2 | 5 |
| | 13 | 4 | 3 | 5 |
| | 14 | 5 | 4 | 5 |
| EXAMPLE | 15 | 5 | 5 | 5 |
| | 16 | 5 | 5 | 5 |
| | 17 | 5 | 5 | 4 |
| | 18 | 5 | 5 | 3 |
| | 19 | 3 | 5 | 5 |
| | 20 | 4 | 5 | 5 |
| | 21 | 5 | 5 | 5 |
| | 22 | 5 | 5 | 5 |
| | 23 | 5 | 5 | 4 |
| | 24 | 5 | 5 | 3 |
| | 25 | 5 | 2 | 3 |
| | 26 | 2 | 5 | 5 |
| | 27 | 3 | 5 | 5 |
| | 28 | 4 | 5 | 5 |
| | 29 | 5 | 5 | 5 |

### [Table 2-2]

**TABLE 2-2**

| | | HEAT YELLOWING RESISTANCE | CORROSION RESISTANCE | WORK ADHESION |
|---|---|---|---|---|
| | 30 | 5 | 5 | 5 |
| | 31 | 5 | 5 | 4 |
| | 32 | 4 | 4 | 3 |
| | 33 | 3 | 3 | 2 |
| | 34 | 5 | 2 | 5 |
| | 35 | 5 | 3 | 5 |
| | 36 | 5 | 4 | 5 |
| | 37 | 5 | 5 | 5 |
| | 38 | 5 | 5 | 5 |
| | 39 | 4 | 5 | 5 |
| | 40 | 3 | 5 | 5 |
| | 41 | 2 | 5 | 5 |
| | 42 | 5 | 5 | 2 |
| | 43 | 5 | 5 | 3 |
| | 44 | 5 | 5 | 4 |
| EXAMPLE | 45 | 5 | 5 | 5 |
| | 46 | 5 | 5 | 5 |
| | 47 | 5 | 4 | 5 |
| | 48 | 5 | 3 | 5 |
| | 49 | 5 | 2 | 5 |
| | 50 | 2 | 5 | 5 |
| | 51 | 5 | 4 | 4 |
| | 52 | 5 | 2 | 5 |
| | 53 | 5 | 5 | 3 |
| | 54 | 4 | 2 | 5 |
| | 55 | 5 | 5 | 3 |
| | 56 | 5 | 5 | 2 |
| | 57 | 5 | 4 | 2 |
| | 58 | 5 | 5 | 2 |

### [Table 2-3]

**TABLE 2-3**

| | | HEAT YELLOWING RESISTANCE | CORROSION RESISTANCE | WORK ADHESION |
|---|---|---|---|---|
| | 1 | 5 | 1 | 5 |
| | 2 | 5 | 5 | 1 |
| | 3 | 3 | 1 | 5 |
| | 4 | 5 | 5 | 1 |
| COMPARATIVE EXAMPLE | 5 | 1 | 5 | 5 |
| | 6 | 5 | 5 | 1 |
| | 7 | 3 | 5 | 1 |
| | 8 | 5 | 5 | 1 |
| | 9 | 5 | 1 | 4 |

As is clear from Table 2-1 to Table 2-3 above, the surface-treated steel sheets corresponding to the examples of the present invention combined excellent heat yellowing resistance, corrosion resistance, and work adhesion, whereas for the surface-treated steel sheets corresponding to the comparative examples of the present invention, one of the heat yellowing resistance, the corrosion resistance, and the work adhesion was not sufficient.

The preferred embodiment of the present invention has been described in detail above with reference to the attached drawings, but the present invention is not limited to such an example. It is apparent that a person having common knowledge in the technical field to which the present invention belongs is able to devise various variation or modification examples within the range of technical ideas described in the claims, and it should be understood that such examples also belong to the technical scope of the present invention as a matter of course.

The embodiment disclosed herein is an example in all respects and should not be considered to be restrictive. The above-described embodiment may be omitted, substituted, or modified in various forms without departing from the scope of the appended claims and the configuration and gist that fall within the technical scope of the present invention as described below. For example, configuration requirements of the above-described embodiment can be arbitrarily combined within a range that does not impair the effects. Further, the operations and effects about the configuration requirements relating to an arbitrary combination can be obtained as a matter of course from the combination, and those skilled in the art can obtain clear other operations and other effects from the description herein.

Further, the effects explained herein are merely explanatory or illustrative in all respects and not restrictive. That is, the technique relating to the present invention can offer other clear effects to those skilled in the art from the description herein in addition to or in place of the above-described effects.

Note that the following configuration also belongs to the technical scope of the present invention.
(1) A surface-treated steel sheet includes:
   a Zn-containing plating layer located on a surface of a steel sheet serving as a base material;
   a primer coating layer located on the Zn-containing plating layer, and at least containing a vanadium compound; and
   an upper coating layer located on the primer coating layer, wherein:
      an average thickness of the primer coating layer is in a range of 3.0 to 15.0 µm;
      an average thickness of the upper coating layer is in a range of 7.0 to 25.0 µm; and
      a Vickers hardness of the upper coating layer is in a range of 25 to 70 Hv and a Vickers hardness of the primer coating layer is 20 Hv or less, and, the Vickers hardness of the primer coating layer is lower than the Vickers hardness of the upper coating layer and a difference between the Vickers hardness of the upper coating layer and the Vickers hardness of the primer coating layer is in a range of 5 to 50 Hv.
(2) The surface-treated steel sheet according to (1), wherein:
   a glass transition point Tg of a film-forming component of the primer coating layer is in a range of 0 to 40°C; and
   a glass transition point Tg of a film-forming component of the upper coating layer is in a range of 40 to 70°C.
(3) The surface-treated steel sheet according to (1) or (2), wherein an average particle diameter of the vanadium compound is in a range of 0.05 to 2.00 µm.
(4) The surface-treated steel sheet according to any one of (1) to (3), wherein:
   a content of the vanadium compound in the primer coating layer is in a range of 5 to 50 mass% relative to a total solid content mass of the primer coating layer;
   a content of a film-forming component in the primer coating layer is in a range of 30 to 80 mass% relative to the total solid content mass of the primer coating layer; and
   the vanadium compound and the film-forming component are contained so that a total content of the vanadium compound and the film-forming component is 100 mass% or less of the total solid content mass of the primer coating layer.
(5) The surface-treated steel sheet according to any one of (1) to (4), wherein the upper coating layer contains an aluminum pigment.
(6) The surface-treated steel sheet according to any one of (1) to (5), further includes a chemical treatment coating layer between the Zn-containing plating layer and the primer coating layer.

### EXPLANATION OF CODES

- 1: surface-treated steel sheet
- 10: base material steel sheet
- 20: Zn-containing plating layer
- 30: primer coating layer
- 40: upper coating layer
- 50: chemical treatment coating layer

## Claims

1. A surface-treated steel sheet comprising:
a Zn-containing plating layer located on a surface of a steel sheet serving as a base material;
a primer coating layer located on the Zn-containing plating layer, and at least containing a vanadium compound; and
an upper coating layer located on the primer coating layer, wherein:
an average thickness of the primer coating layer is in a range of 3.0 to 15.0 µm;
an average thickness of the upper coating layer is in a range of 7.0 to 25.0 µm; and
a Vickers hardness of the upper coating layer is in a range of 25 to 70 Hv, a Vickers hardness of the primer coating layer is 20 Hv or less, and a difference the Vickers hardness of the upper coating layer and the Vickers hardness of the primer coating layer is in a range of 5 to 50 Hv.

2. The surface-treated steel sheet according to claim 1, wherein:
a glass transition point Tg of a film-forming component of the primer coating layer is in a range of 0 to 40°C; and
a glass transition point Tg of a film-forming component of the upper coating layer is in a range of 40 to 70°C.

3. The surface-treated steel sheet according to claim 1 or 2, wherein an average particle diameter of the vanadium compound is in a range of 0.05 to 2.00 µm.

4. The surface-treated steel sheet according to claim 1 or 2, wherein:
a content of the vanadium compound in the primer coating layer is in a range of 5 to 50 mass% relative to a total solid content mass of the primer coating layer;
a content of a film-forming component in the primer coating layer is in a range of 30 to 80 mass% relative to the total solid content mass of the primer coating layer; and
the vanadium compound and the film-forming component are contained so that a total content of the vanadium compound and the film-forming component is 100 mass% or less of the total solid content mass of the primer coating layer.

5. The surface-treated steel sheet according to claim 3, wherein:
a content of the vanadium compound in the primer coating layer is in a range of 5 to 50 mass% relative to a total solid content mass of the primer coating layer;
a content of a film-forming component in the primer coating layer is in a range of 30 to 80 mass% relative to the total solid content mass of the primer coating layer; and
the vanadium compound and the film-forming component are contained so that a total content of the vanadium compound and the film-forming component is 100 mass% or less of the total solid content mass of the primer coating layer.

6. The surface-treated steel sheet according to claim 1 or 2, wherein the upper coating layer contains an aluminum pigment.

7. The surface-treated steel sheet according to claim 1 or 2, further comprising a chemical treatment coating layer between the Zn-containing plating layer and the primer coating layer.
